# EUROPEAN PATENT SPECIFICATION

(11) **EP 2 647 482 B1**
(45) Date of publication and mention of the grant of the patent: **18.11.2015**
(21) Application number: 13152167.6
(22) Date of filing: 22.01.2013
(51) Int. Cl.: B29C 45/76, B29C 45/00, H02J 7/34

(54) **Injection molding machine with external apparatus, e.g. with a power distributor**
Spritzgussmaschine mit externer Vorrichtung, z.B. mit einem Leistungsverteiler
Machine de moulage par injection avec dispositif externe, par example avec distributeur de puissance

(30) Priority: 26.01.2012 JP 2012014345
(43) Date of publication of application: 09.10.2013
(73) Proprietor: SUMITOMO HEAVY INDUSTRIES, LTD., Tokyo 141-6025 (JP)
(72) Inventor: Okada, Noritaka, Kanagawa, 237-8555 (JP)
(74) Representative: Hoffmann Eitle

(56) References cited:
- EP-A1- 2 587 659
- JP-A- 2007 130 797
- JP-A- 2010 264 490
- US-A1- 2005 258 795

## Description

### BACKGROUND OF THE INVENTION

### 1. Field of the Invention

The present invention relates to an injection molding machine system, and to an injection molding machine with a power distributor where an electric power accumulating part is charged with regenerated electric power.

### 2. Description of the Related Art

For example, Japanese Laid-Open Patent Application No. 2001-232672 describes an injection molding machine in which an electric power accumulating part is charged with energy regenerated by a motor via a charge and discharge circuit in order to save energy.

Also, EP 2 587 659 A1 shows an injection molding machine including a power supply regeneration converter.

However, in the case of a system including multiple injection molding machines, providing an electric power accumulating part that stores the regenerated electric power of an injection molding machine for each of the injection molding machines makes it difficult to reduce the installation space and the cost of the entire system.

### SUMMARY OF THE INVENTION

It is an object of the present invention to provide an injection molding machine system, and an injection molding machine that make it possible to reduce the capacity of an electric power accumulating part provided in an injection molding machine or eliminate the electric power accumulating part itself.

According to an aspect of the present invention, an injection molding machine system according to claim 4 includes a plurality of injection molding machines according to any of claims 1 to 3; and a power distributor being the external apparatus configured to supply electric power to the injection molding machines, wherein the power distributor includes an electric power accumulating part configured to store electric power regenerated by the injection molding machines.

According to an aspect of the present invention, an injection molding machine includes a power feed part configured to supply electric power to a motor based on electric power supplied from an external apparatus, wherein the power feed part is configured to supply electric power regenerated by the motor to an electric power accumulating part of the external apparatus.

A power distributor configured to supply electric power for a plurality of injection molding machines includes an electric power accumulating part configured to store regenerated electric power of the injection molding machines.

A power distributor configured to convert electric power of a commercial power supply and to supply the converted electric power to a plurality of loads includes an electric power accumulating part configured to store regenerated electric power of the loads.

An injection molding machine system includes an injection molding machine; and a power distributor configured to supply electric power to the injection molding machine, wherein the power distributor is configured to convert externally supplied sine wave electric power into rectangular wave electric power, and the injection molding machine is configured to drive a motor based on the rectangular wave electric power supplied from the power distributor.

A power distributor configured to convert electric power of a commercial power supply and to supply the converted electric power to a plurality of loads includes a conversion part configured to convert sine wave electric power of the commercial power supply into rectangular wave electric power.

It is possible to reduce the capacity of an electric power accumulating part provided in an injection molding machine or to eliminate the electric power accumulating part itself.

The object and advantages of the embodiments will be realized and attained by means of the elements and combinations particularly pointed out in the claims.

It is to be understood that both the foregoing general description and the following detailed description are exemplary and explanatory and not restrictive of the invention.

### BRIEF DESCRIPTION OF THE DRAWINGS

Other objects, features and advantages of the present invention will become more apparent from the following detailed description when read in conjunction with the accompanying drawings, in which:
FIG. 1 is a diagram illustrating an injection molding machine system according to a first embodiment of the present invention;
FIG. 2 is a diagram illustrating an injection molding machine system according to a second embodiment of the present invention;
FIG. 3 is a diagram illustrating a converter that is a first example that may be applied to converters of FIG. 2;
FIG. 4 is a timing chart of switch control signals that control the operation of the converter of FIG. 3;
FIG. 5 is a timing chart of the voltage waveforms of rectangular wave electric power generated by the converter of FIG. 3;
FIG. 6 is a diagram illustrating a converter;
FIG. 7 is a timing chart of switch control signals that control the operation of the converter of FIG. 6;
FIG. 8 is a timing chart of the voltage waveforms of sine wave electric power generated by the converter of FIG. 6;
FIG. 9 is a diagram illustrating a converter that is a second example that may be applied to the converters of FIG. 2;
FIG. 10 is a timing chart of switch control signals that control the operation of the converter of FIG. 9;
FIG. 11 is a timing chart of the voltage waveforms of rectangular wave electric power generated by the converter of FIG. 9;
FIG. 12 is a diagram illustrating a converter that is a third example that may be applied to the converters of FIG. 2;
FIG. 13 is a diagram illustrating sine wave voltage waveforms input to AC power supply lines of the converter of FIG. 12;
FIG. 14 is a timing chart of switch control signals that control the operation of a switch circuit of the converter of FIG. 12;
FIG. 15 is a timing chart of the voltage waveforms of rectangular wave electric power generated by the converter of FIG. 12;
FIG. 16 is a diagram illustrating a converter that is a fourth example that may be applied to the converters of FIG. 2;
FIG. 17 is a diagram illustrating a configuration of each of nine switch elements of a switch circuit of the converter of FIG. 16;
FIG. 18 is a diagram illustrating sine wave voltage waveforms input to AC power supply lines of the converter of FIG. 16;
FIG. 19 is a timing chart of switch control signals that control the operations of the switch elements of FIG. 17; and
FIG. 20 is a timing chart of the voltage waveforms of rectangular wave electric power generated by the converter of FIG. 16.

### DETAILED DESCRIPTION OF THE PREFERRED EMBODIMENTS

A description is given below, with reference to the accompanying drawings, of embodiments of the present invention.

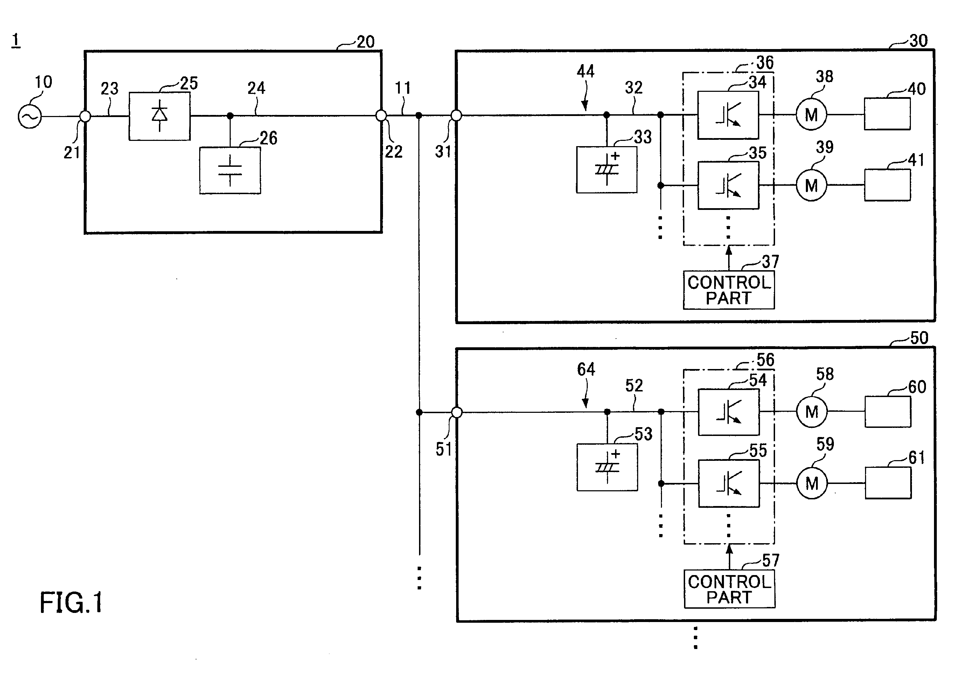

FIG. 1 is a diagram illustrating an injection molding machine system 1 according to a first embodiment of the present invention. The injection molding machine system 1 includes multiple electric injection molding machines (two injection molding machines 30 and 50 are illustrated in FIG. 1 by way of example) and a power supply system 20 that supplies each of the injection molding machines with electric power based on sine wave alternating current (AC) electric power supplied from a commercial power supply 10. The commercial power supply 10 is an external power supply that outputs sine wave AC electric power of a predetermined voltage (for example, 100 V or 200 V) at a constant frequency (for example, 50 Hz or 60 Hz). The power supply system 20 is a power distributor that includes an electric power accumulator 26 as an electric power accumulating part that is charged with regenerated electric power supplied from a motor of each of the injection molding machines.

The injection molding machine 30 includes multiple motors (two motors 38 and 39 are illustrated in FIG. 1 by way of example) and a driving part 36 that drives the motors. Likewise, the injection molding machine 50 includes multiple motors (two motors 58 and 59 are illustrated in FIG. 1 by way of example) and a driving part 56 that drives the motors. For example, the motors 38 and 58 are servomotors for opening and closing molds, and the motors 39 and 59 are servomotors for injection.

The injection molding machine system 1 has a function of charging the electric power accumulator 26 with energy regenerated by the motors of the injection molding machines and a function of supplying the motors of the injection molding machines with energy discharged from the electric power accumulator 26. That is, the energy regenerated by at least one of the motors of the injection molding machine 30 is stored (accumulated) in the electric power accumulator 26 of the power supply system 20 via the driving part 36 and an interconnect 11, and the energy regenerated by at least one of the motors of the injection molding machine 50 is stored (accumulated) in the electric power accumulator 26 of the power supply system 20 via the driving part 56 and the interconnect 11. Further, the energy discharged from the electric power accumulator 26 is supplied to at least one of the motors of the injection molding machine 30 via the driving part 36 and the interconnect 11, and to at least one of the motors of the injection molding machine 50 via the driving part 56 and the interconnect 11. These functions achieve energy saving in the injection molding machine system 1.

Thus, according to the injection molding machine system 1, the electric power accumulator 26 that stores the regenerated electric power of the motors of the individual injection molding machines is provided in the power supply system 20 that is provided outside the individual injection molding machines. This makes it possible to reduce the capacity of an electric power accumulating part provided in each injection molding machine or eliminate the electric power accumulating part itself. As a result, for example, it is possible to prevent increases in the size and cost of each injection molding machine, so that it is possible to easily reduce the installation space and cost of the entire injection molding machine system 1.

Next, a description is given in more detail of a configuration of the injection molding machine system 1.

The motor 38 is a servomotor for opening and closing molds that operates to move a mold opening and closing shaft 40. A mold closing process to close molds, a mold opening process to open molds, and a mold clamping process to clamp molds are performed by the movement of the mold opening and closing shaft 40. The same is the case with the motor 58 and a mold opening and closing shaft 60 of the injection molding machine 50.

The motor 39 is a motor for injection that operates to cause a screw 41 inside a heating cylinder to move forward. An injection process to inject a molten material accumulated in front of the screw 41 into a mold cavity is performed by the forward movement of the screw 41. The same is the case with the motor 59 and the screw 61.

The driving part 36, which is configured to drive the motors including the motors 38 and 39, includes multiple motor driving circuits that are provided on a motor basis. A motor driving circuit 34 outputs driving electric power that causes the motor 38 to operate. A motor driving circuit 35 outputs driving electric power that causes the motor 39 to operate. The motor driving circuits including the motor driving circuits 34 and 35 are connected to a power feed channel part 44 so as to be connected in parallel to the power supply system 20. Each of the motor driving circuits including the motor driving circuits 34 and 35 may be, for example, an inverter that converts the output (direct current [DC] electric power) of the power supply system 20 into three-phase AC electric power, and may include a three-phase bridge circuit formed of six power transistors. The same is the case with the driving part 56, motor driving circuits 54 and 55, and a power feed channel part 64 of the injection molding machine 50.

The injection molding machines 30 and 50 include control parts 37 and 57, respectively. Each of the control parts 37 and 57 is based on, for example, a microcomputer, and includes a central processing unit (CPU), a read-only memory (ROM) that contains a control program and the like, a random access memory (RAM) that stores operation results and the like, a timer, a counter, an input interface, and an output interface.

Each of the control parts 37 and 57 controls the start and end of each of multiple processes in the injection molding process by transmitting an electric current (torque) command corresponding to each process to the corresponding motor driving circuit. The motor driving circuit drives a motor used in the corresponding process in accordance with the command. For example, the control part 37 implements the mold opening process and the mold closing process by controlling the rpm of the motor 38 with the motor driving circuit 34. Further, the control part 37 implements the injection process and a pressure maintaining process by controlling the rpm of the motor 39 with the motor driving circuit 35. The same is the case with the control part 57.

The power feed channel part 44 is a DC power supply channel part (also referred to as a "DC link") provided between the DC output side of the power supply system 20 and the DC input side of the motor driving circuits including the motor driving circuits 34 and 35 of the driving part 36. The power feed channel part 44 includes a DC power supply line 32 and a smoothing capacitor 33. The DC power supply line 32 is a transmission channel of a DC electric current that flows among a power supply input terminal 31 of the injection molding machine 30, the driving part 36, and the smoothing capacitor 33. The smoothing capacitor 33 smoothes the DC voltage of the DC power supply line 32. Examples of the smoothing capacitor 33 include an electrolytic capacitor. The same is the case with the power feed channel part 64, a DC power supply line 52, a smoothing capacitor 53, and a power supply input terminal 51 of the injection molding machine 50.

The power supply input terminal 31 of the injection molding machine 30 and the power supply input terminal 51 of the injection molding machine 50 are connected to a power supply output terminal 22 of the power supply system 20 via the interconnect 11.

The power supply system 20 supplies DC electric power to the multiple injection molding machines based on the sine wave AC electric power supplied from the commercial power supply 10. The DC electric power is supplied to, for example, the driving part 36 of the injection molding machine 30 and the driving part 56 of the injection molding machine 50.

The power supply system 20 includes a converter 25 as a converting device that converts the sine wave AC electric power supplied from the commercial power supply 10 into DC electric power that may be stored in the electric power accumulator 26 via a DC power supply line 24.

The input side of the converter 25 is connected to the commercial power supply 10 via a power supply input terminal 21 and an AC power supply line 23 of the power supply system 20. The output side of the converter 25 is connected via the DC power supply line 24 and the power supply output terminal 22 of the power supply system 20 to the injection molding machines 30 and 50 connected to the interconnect 11. The converter 25 is, for example, an AC/DC converter that includes a rectifier formed of a three-phase diode bridge including six diodes.

The electric power accumulator 26 is an electric power accumulating part that has a sufficiently larger charge storage capacity than the smoothing capacitors 33 and 53. Examples of the electric power accumulator 26 include a battery and an electric double-layer capacitor. Employment of an electric double-layer capacitor makes it possible to prevent an increase in the size of the power supply system 20 while ensuring a capacity for storing regenerated electric power.

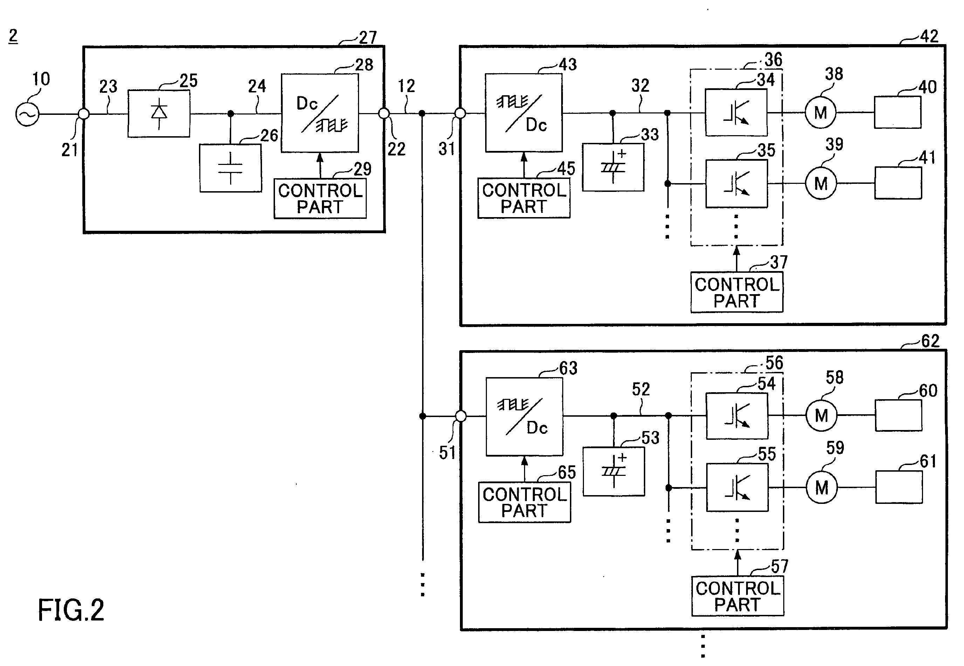

FIG. 2 is a diagram illustrating an injection molding machine system 2 according to a second embodiment of the present invention. A description of the same points as in the above-described first embodiment is omitted. The injection molding machine system 2 includes multiple electric injection molding machines (two injection molding machines 42 and 62 are illustrated in FIG. 2 by way of example) and a power supply system 27 that supplies each of the injection molding machines with electric power based on the sine wave AC electric power supplied from the commercial power supply 10. Each of the injection molding machines includes a power feed part that supplies electric power to multiple motors based on the converted electric power supplied from the power supply system 27 that converts the electric power of the commercial power supply 10. The power supply system 27 converts the regenerated electric power of the motors of the injection molding machines stored in the electric power accumulator 26 and/or the sine wave electric power supplied from the commercial power supply 10 into rectangular wave electric power.

The power supply input terminal 31 of the injection molding machine 42 and the power supply input terminal 51 of the injection molding machine 62 are connected to the power supply output terminal 22 of the power supply system 27 via an interconnect 12.

The power supply system 27 supplies rectangular wave AC electric power to the injection molding machines based on the sine wave AC electric power supplied from the commercial power supply 10. The rectangular wave electric power is supplied to, for example, a converter 43 of the injection molding machine 42 and a converter 63 of the injection molding machine 62. The power supply system 27 includes the converter 25 and a converter 28 as a converting device that converts the sine wave AC electric power supplied from the commercial power supply 10 into rectangular wave electric power that is supplied to the injection molding machines. Further, the power supply system 27 includes the converter 28 as a converting device that converts the regenerated electric power stored in the electric power accumulator 26 into rectangular wave electric power that is supplied to the injection molding machines.

The converter 25 converts the sine wave AC electric power supplied from the commercial power supply 10 into DC electric power that may be stored in the electric power accumulator 26 via the DC power supply line 24.

The converter 28 converts DC electric power obtained by the converting operation of the converter 25 and/or DC electric power stored in the electric power accumulator 26 into rectangular wave electric power that is supplied to the injection molding machines in accordance with a switch control signal provided from a control part 29. Further, the converter 28 converts rectangular wave electric power obtained by the conversion of regenerated electric power from a motor in each of the injection molding machines into DC electric power that may be stored in the electric power accumulator 26 in accordance with a switch control signal provided from the control part 29, and stores the DC electric power after the conversion in the electric power accumulator 26.

The control part 29 is based on, for example, a microcomputer, and includes a central processing unit (CPU), a ROM that contains a control program and the like, a RAM that stores operation results and the like, a timer, a counter, an input interface, and an output interface.

The injection molding machine 42 includes the converter 43 and the driving part 36 as a power feed part that supplies electric power to multiple motors including the motors 38 and 39 based on rectangular wave electric power supplied from the power supply system 27. The converter 43 converts the rectangular wave electric power supplied from the power supply system 27 via the interconnect 12 and the power supply input terminal 31 into DC electric power that may be supplied to the driving part 36 in accordance with a switch control signal provided from a control part 45 when at least one of the motors including the motors 38 and 39 performs a power running operation. Further, the converter 43 converts regenerated electric power into rectangular wave electric power that is supplied to the converter 28 of the power supply system 27 in accordance with a switch control signal provided from the control part 45 when at least one of the motors including the motors 38 and 39 performs a regenerative operation via the driving part 36. The driving part 36 converts the DC electric power generated by the conversion by the converter 43 into three-phase AC electric power that may drive the motors. Further, the driving part 36 converts the electric power regenerated by the motors into DC electric power that may be supplied to the converter 43. The same is the case with the converter 63, a control part 65, and the driving part 56.

Each of the control parts 45 and 65 is based on, for example, a microcomputer, and includes a central processing unit (CPU), a ROM that contains a control program and the like, a RAM that stores operation results and the like, a timer, a counter, an input interface, and an output interface.

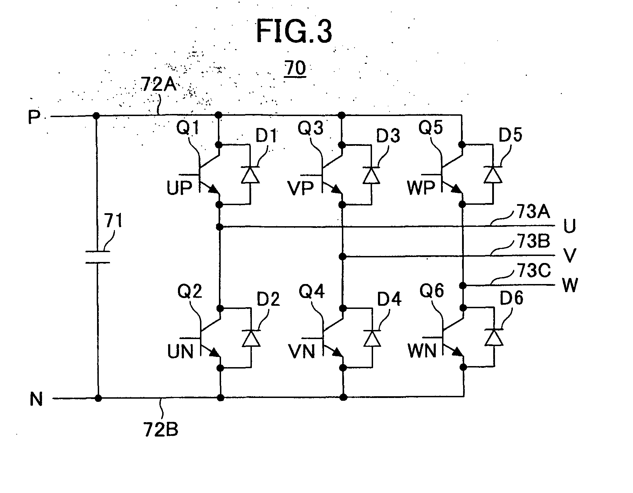

FIG. 3 is a diagram illustrating a converter 70, which is a first example (embodiment) that may be applied to the converters 28, 43, and 63 of FIG. 2. In the case of applying the converter 70 to the converter 28, DC power supply lines 72A and 72B correspond to the DC power supply line 24 of FIG. 2, and AC power supply lines 73A, 73B, and 73C correspond to a power supply line connected to the power supply output terminal 22 of FIG. 2. In the case of applying the converter 70 to the converters 43 and 63, the DC power supply lines 72A and 72B correspond to each of the DC power supply lines 32 and 52 of FIG. 2, and the AC power supply lines 73A, 73B, and 73C correspond to each of power supply lines connected to the power supply output terminals 31 and 51 of FIG. 2.

The converter 70 includes a three-phase bridge circuit formed of six power transistors Q1, Q2, Q3, Q4, Q5, and Q6. The power transistors Q1 through Q6 are connected in parallel to diodes D1, D2, D3, D4, D5, and D6, respectively. A smoothing capacitor 71 is inserted between the DC power supply line 72A on the higher potential side and the DC power supply line 72B on the lower potential side.

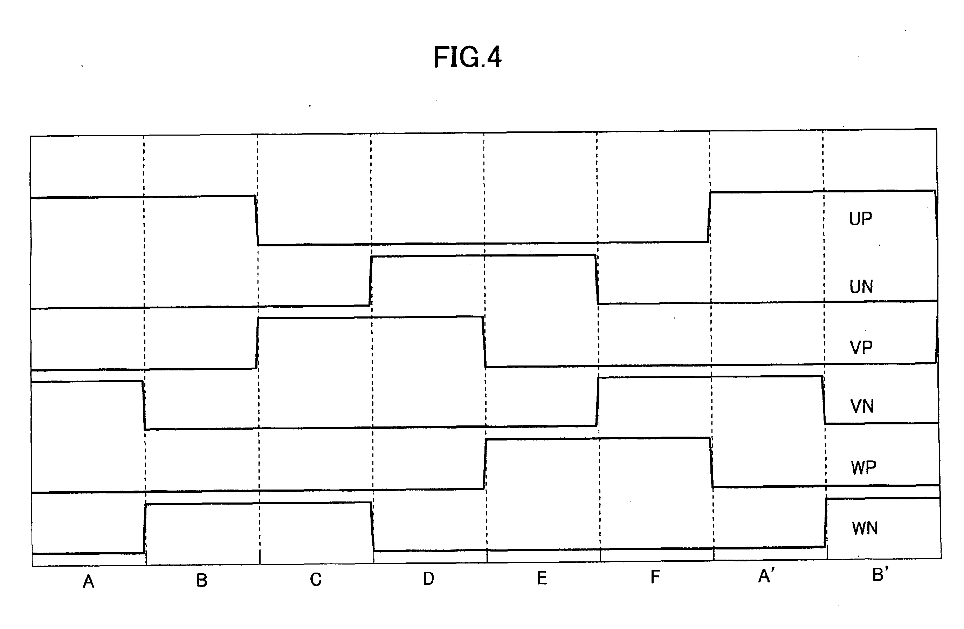

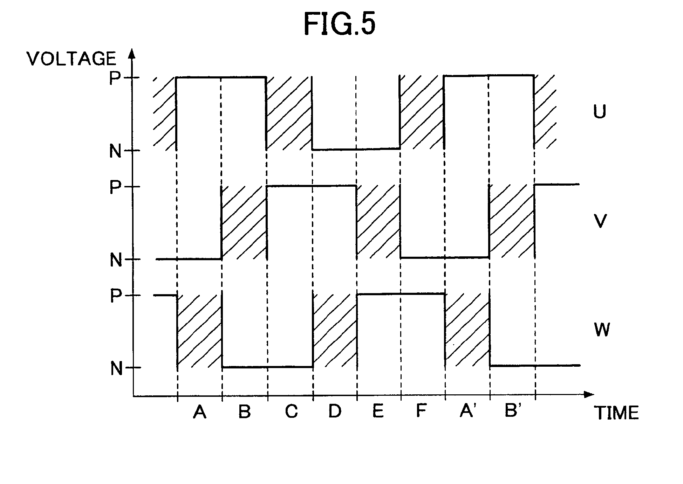

FIG. 4 is a timing chart of switch control signals that control the operation of the converter 70. These switch control signals are provided from the control part 29, 45, or 65 of FIG. 2, and are repeated with six phases A, B, C, D, E, and F serving as one cycle. When the switch control signal is HIGH (at high level), the power transistor is turned ON, and when the switch control signal is LOW (at low level), the power transistor is turned OFF. By controlling the operation of the converter 70 in accordance with such switch control signals, rectangular wave voltage waveforms as illustrated in FIG. 5 are generated in the AC power supply lines 73A, 73B, and 73C of the converter 70. In FIG. 5, parts indicated by oblique lines indicate sections where voltage is undetermined in the converter 70 itself of FIG. 3.

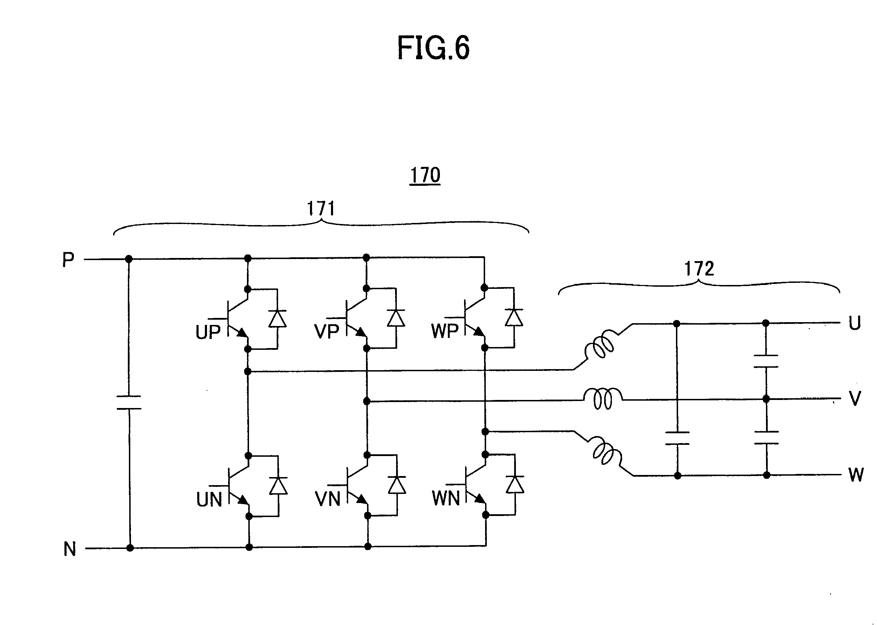

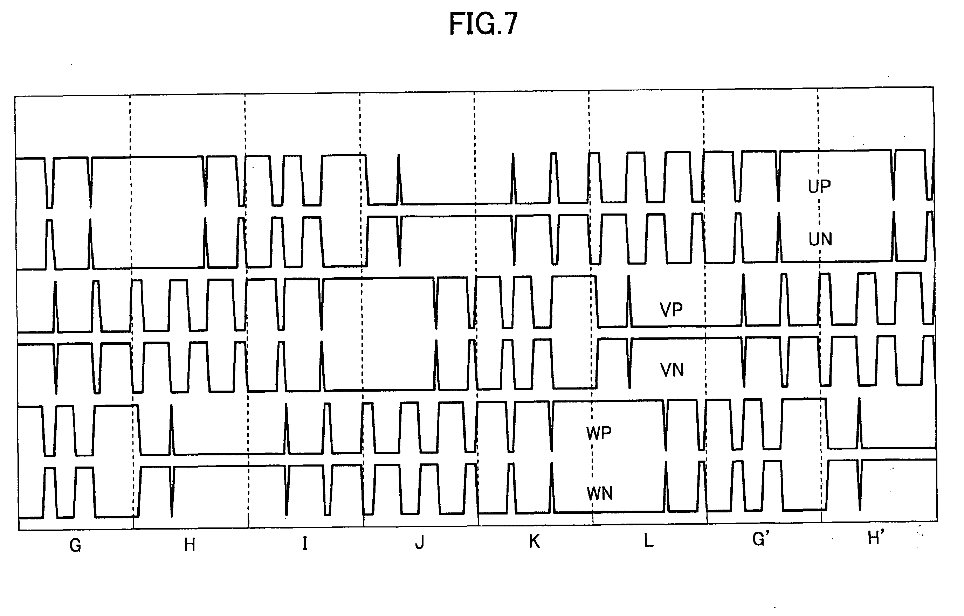

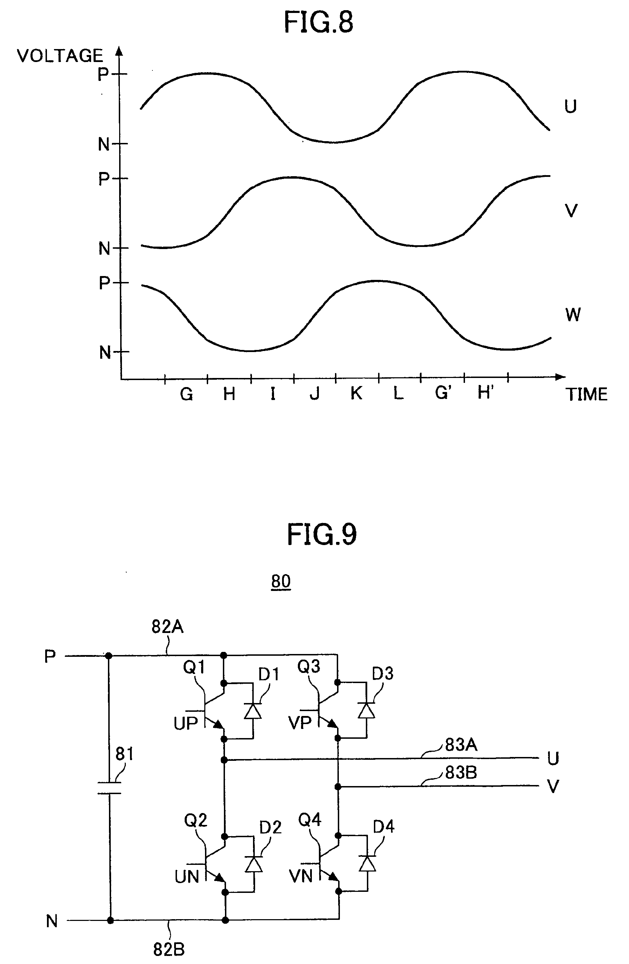

By using the converter 70 that converts DC electric power into rectangular wave electric power or converts rectangular wave electric power into DC electric power, the injection molding machine system 2 makes it possible to reduce power loss and cost compared with the case of using a converter that converts DC electric power into sine wave electric power or converts sine wave electric power into DC electric power (such as a converter 170 of FIG. 6). The converter 170 generates sine wave voltage waveforms as illustrated in FIG. 8 in accordance with the switch control signals of FIG. 7.

That is, by causing electric power that is converted into or from DC electric power to be a rectangular wave, an LC filter 172 as illustrated in FIG. 6 may be deleted. Therefore, it is possible to eliminate power loss and cost due to an LC filter. Further, it is possible to reduce the switching frequency of each of power transistors 171. Accordingly, it is possible to eliminate power loss due to the switching of the power transistors 171.

For example, the frequency of the switch control signals of the converter 170 of FIG. 7 may vary up to 10 kHz, while, the frequency of the switch control signals of the converter 70 of FIG. 4, which is adjusted to the frequency of the commercial power supply 10, may be approximately 50 Hz or approximately 60 Hz (preferably 10 Hz to 100 Hz). Thus, the ON-OFF frequency of a transistor is reduced, so that power loss is reduced, thus increasing the latitude of designing. For example, it is possible to reduce the ON voltage of a transistor, to slow down the switching of a transistor, and to reduce the cost of a transistor.

FIG. 9 is a diagram illustrating a converter 80, which is a second example (embodiment) that may be applied to the converters 28, 43, and 63 of FIG. 2. In the case of applying the converter 80 to the converter 28, DC power supply lines 82A and 82B correspond to the DC power supply line 24 of FIG. 2, and AC power supply lines 83A and 83B correspond to a power supply line connected to the power supply output terminal 22 of FIG. 2. In the case of applying the converter 80 to the converters 43 and 63, the DC power supply lines 82A and 82B correspond to each of the DC power supply lines 32 and 52 of FIG. 2, and the AC power supply lines 83A and 83B correspond to each of power supply lines connected to the power supply output terminals 31 and 51 of FIG. 2.

The converter 80 includes a single-phase bridge circuit formed of four power transistors Q1, Q2, Q3, and Q4. The power transistors Q1 through Q4 are connected in parallel to diodes D1, D2, D3, and D4, respectively. A smoothing capacitor 81 is inserted between the DC power supply line 82A on the higher potential side and the DC power supply line 82B on the lower potential side.

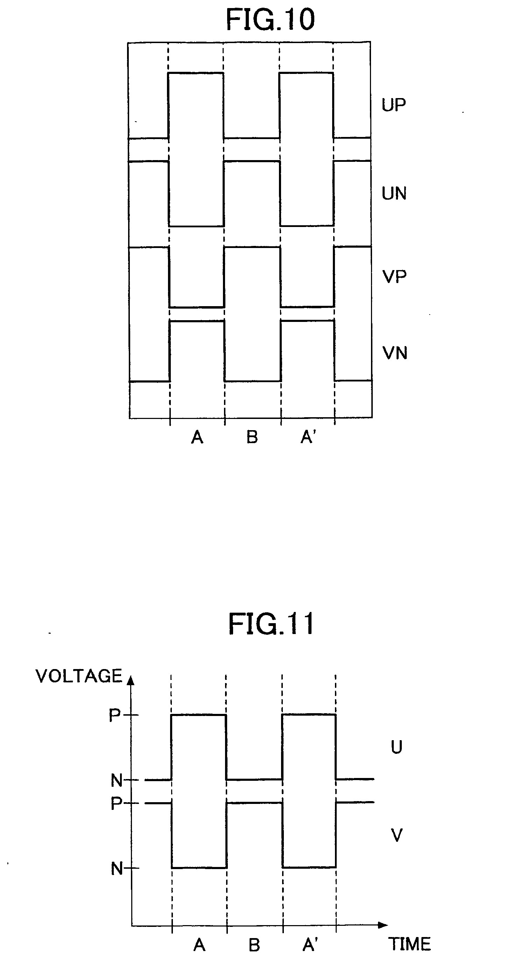

FIG. 10 is a timing chart of switch control signals that control the operation of the converter 80. These switch control signals are provided from the control part 29, 45, or 65 of FIG. 2, and are repeated with two phases A and B serving as one cycle. When the switch control signal is HIGH (at high level), the power transistor is turned ON, and when the switch control signal is LOW (at low level), the power transistor is turned OFF. By controlling the operation of the converter 80 in accordance with such switch control signals, rectangular wave voltage waveforms as illustrated in FIG. 11 are generated in the AC power supply lines 83A and 83B of the converter 80.

The same as described above, by using the converter 80 that converts DC electric power into rectangular wave electric power or converts rectangular wave electric power into DC electric power, the injection molding machine system 2 makes it possible to reduce power loss and cost compared with the case of using a converter that converts DC electric power into sine wave electric power or converts sine wave electric power into DC electric power.

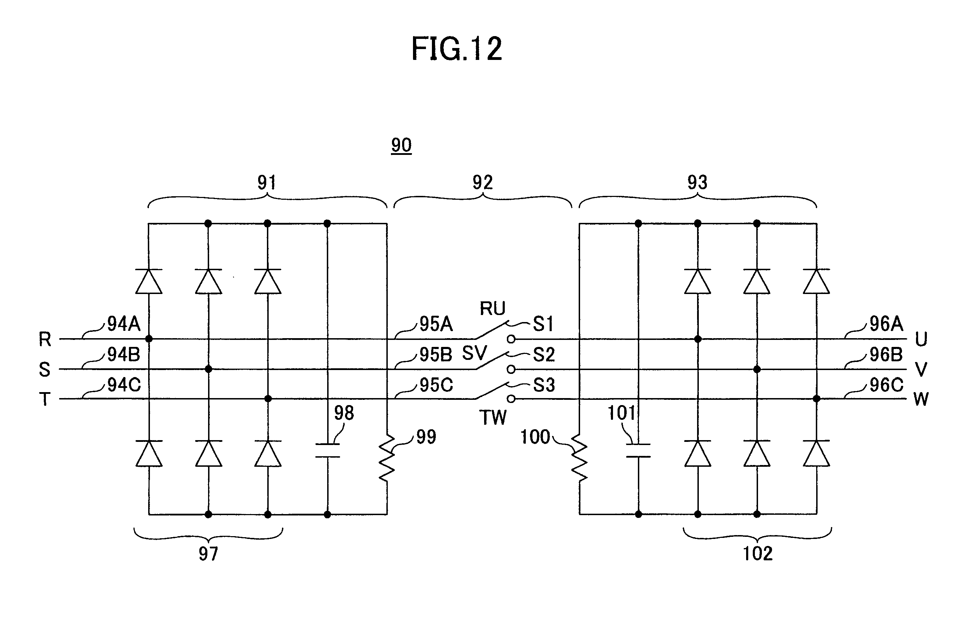

FIG. 12 is a diagram illustrating a converter 90, which is a third example (embodiment) that may be applied to the converters 28, 43, and 63 of FIG. 2. The converter 90 is a so-called simplified matrix converter. In the case of applying the converter 90 to the converter 28 (and the converter 25), AC power supply lines 94A, 94B, and 94C correspond to the AC power supply line 23 of FIG. 2, and AC power supply lines 96A, 96B, and 96C correspond to a power supply line connected to the power supply output terminal 22 of FIG. 2. In the case of applying the converter 90 to the converter 43 (and the driving part 36) and the converter 63 (and the driving part 56), the AC power supply lines 96A, 96B, and 96C correspond to each of power supply lines connected to the power supply output terminals 31 and 51 of FIG. 2, and the AC power supply lines 94A, 94B, and 94C correspond to power lines connected to the motors, etc., of FIG. 2.

The converter 90 includes surge absorber circuits 91 and 93 and a switch circuit 92 inserted between the surge absorber circuits 91 and 93. The surge absorber circuit 91 includes a rectifier circuit 97 formed of a three-phase diode bridge including six diodes and a capacitor 98 and a resistor 99 that are connected in parallel to the rectifier circuit 97. The surge absorber circuit 93 includes a rectifier circuit 102 formed of a three-phase diode bridge including six diodes and a capacitor 101 and a resistor 100 that are connected in parallel to the rectifier circuit 102. The switch circuit 92 includes switches S1, S2, and S3 capable of turning ON and OFF AC power supply channels 95A, 95B, and 95C between the surge absorber circuits 91 and 93.

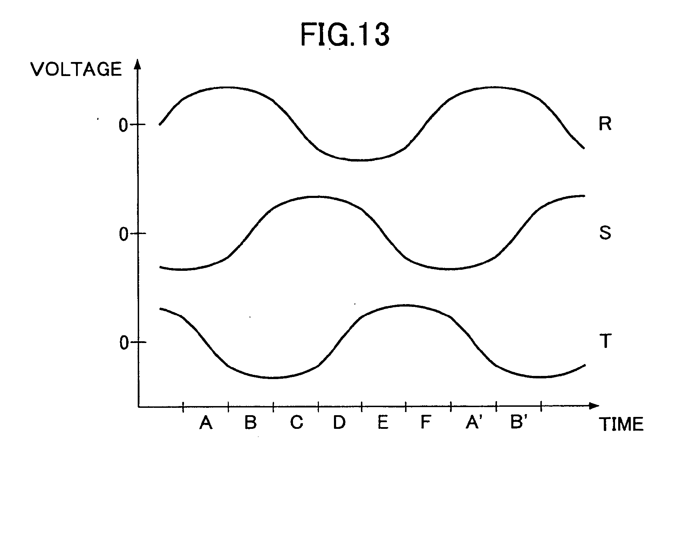

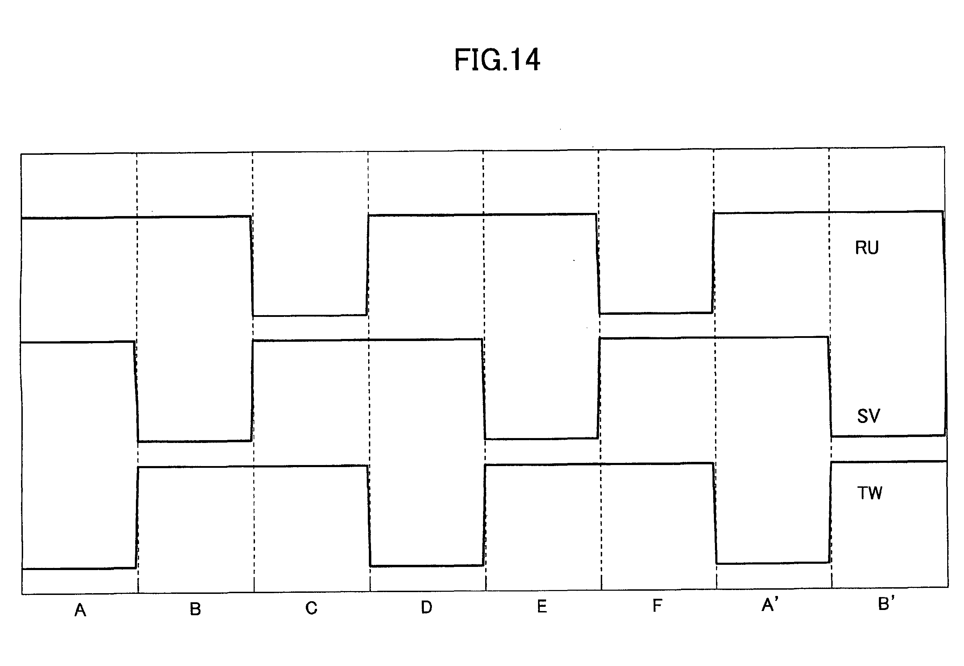

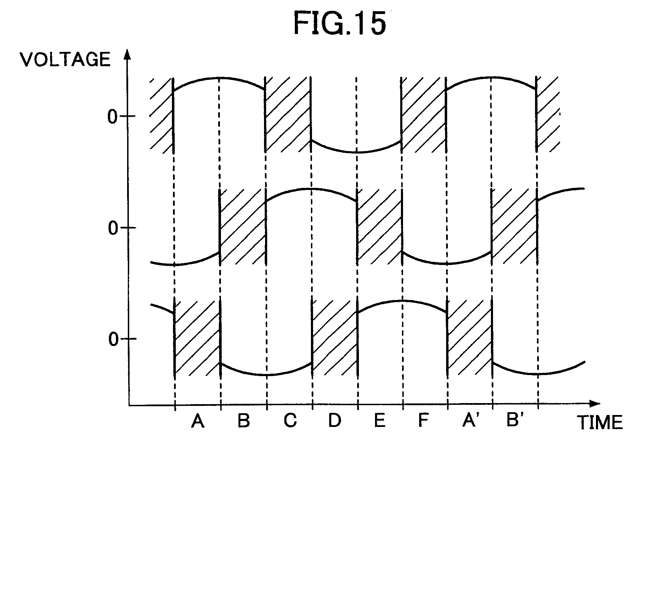

FIG. 13 illustrates sine wave voltage waveforms input to the AC power supply lines 94A, 94B, and 94C. FIG. 14 is a timing chart of switch control signals that control the operation of the switch circuit 92. These switch control signals are provided from the control part 29, 45, or 65 of FIG. 2, and are repeated with six phases A, B, C, D, E, and F serving as one cycle. When the switch control signals are HIGH (at high level), the switches S1, S2, and S3 are turned ON, and when the switch control signals are LOW (at low level), the switches S1, S2, and S3 are turned OFF. By controlling the operation of the converter 90 in accordance with such switch control signals, rectangular wave voltage waveforms as illustrated in FIG. 15 are generated in the AC power supply lines 96A, 96B, and 96C of the converter 90. In FIG. 15, parts indicated by oblique lines indicate sections where voltage is undetermined in the converter 90 itself of FIG. 12.

As described above, there are the problems of power loss and cost in the case of using a converter that converts DC electric power into sine wave electric power or converts sine wave electric power into DC electric power.

By using the converter 90 that converts sine wave electric power into rectangular wave electric power or converts rectangular wave electric power into sine wave electric power, the injection molding machine system 2 makes it possible to reduce power loss and cost compared with the case of using converters that perform two-steps conversion via DC electric power.

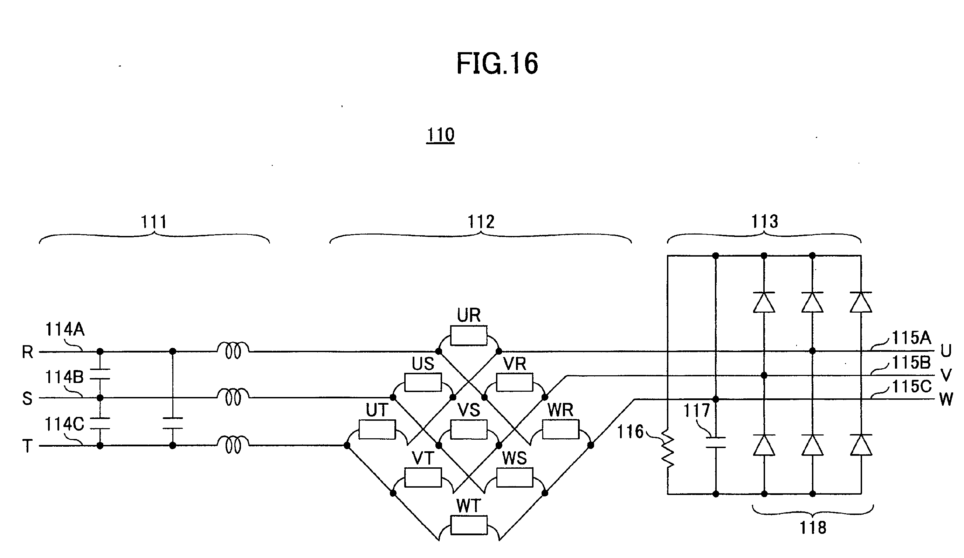

FIG. 16 is a diagram illustrating a converter 110, which is a fourth example (embodiment) that may be applied to the converters 28, 43, and 63 of FIG. 2. The converter 110 is a so-called matrix converter. In the case of applying the converter 110 to the converter 28 (and the converter 25), AC power supply lines 114A, 114B, and 114C correspond to the AC power supply line 23 of FIG. 2, and AC power supply lines 115A, 115B, and 115C correspond to a power supply line connected to the power supply output terminal 22 of FIG. 2. In the case of applying the converter 110 to the converter 43 (and the driving part 36) and the converter 63 (and the driving part 56), the AC power supply lines 115A, 115B, and 115C correspond to each of power supply lines connected to the power supply output terminals 31 and 51 of FIG. 2, and the AC power supply lines 114A, 114B, and 114C correspond to power lines connected to the motors, etc., of FIG. 2.

The converter 110 includes an LC filter 111, a switch circuit 112, and a surge absorber circuit 113. The surge absorber circuit 113 includes a rectifier circuit 118 formed of a three-phase diode bridge including six diodes and a capacitor 117 and a resistor 116 that are connected in parallel to the rectifier circuit 118.

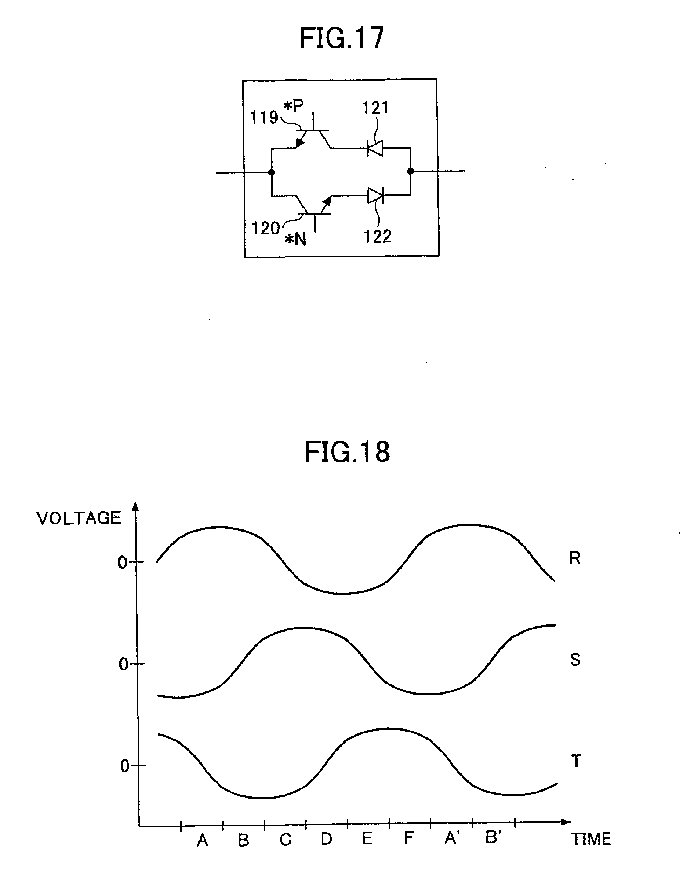

FIG. 17 is a diagram illustrating a configuration of each of nine switch elements UR, US, UT, VR, VS, VT, WR, WS, and WT of the switch circuit 112. Each of the nine switch elements UR, US, UT, VR, VS, VT, WR, WS, and WT includes a series circuit of a diode 121 and a transistor 119 and a series circuit of a diode 122 and a transistor 120, where the series circuits are connected in parallel. In FIG. 17, an asterisk (*) that precedes "P" or "N" corresponds to one of nine reference symbols such as UR in FIG. 16.

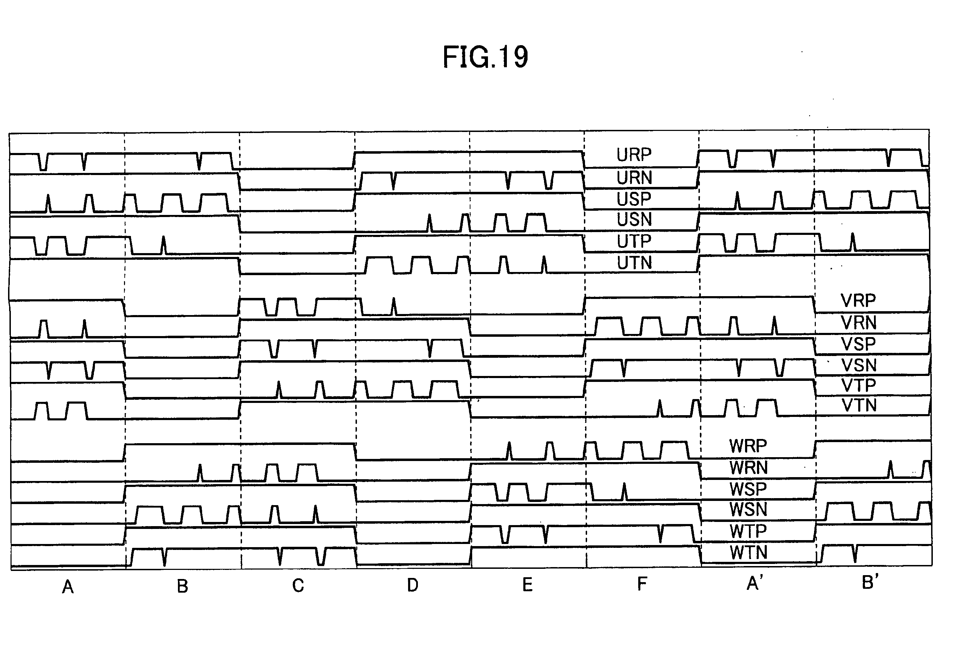

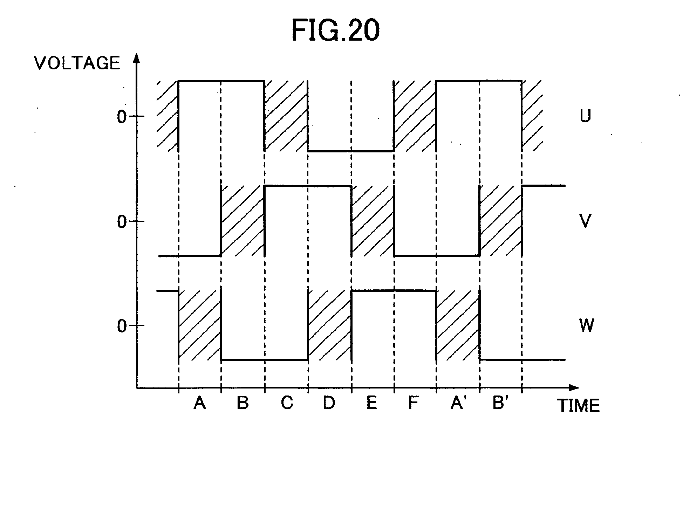

FIG. 18 illustrates sine wave voltage waveforms input to the AC power supply lines 114A, 114B, and 114C. FIG. 19 is a timing chart of switch control signals that control the operations of the switch elements UR, US, UT, VR, VS, VT, WR, WS, and WT of FIG. 17. These switch control signals are provided from the control part 29, 45, or 65 of FIG. 2, and are repeated with six phases A, B, C, D, E, and F serving as one cycle. When the switch control signals are HIGH (at high level), the transistors 119 and 120 are turned ON, and when the switch control signals are LOW (at low level), the transistors 119 and 120 are turned OFF. By controlling the operation of the converter 110 in accordance with such switch control signals, rectangular wave voltage waveforms as illustrated in FIG. 20 are generated in the AC power supply lines 115A, 115B, and 115C of the converter 110. In FIG. 20, parts indicated by oblique lines indicate sections where voltage is undetermined in the converter 110 itself of FIG. 16.

The same as described above, by using the converter 110 that converts sine wave electric power into rectangular wave electric power or converts rectangular wave electric power into sine wave electric power, the injection molding machine system 2 makes it possible to reduce power loss and cost compared with the case of using converters that perform two-steps conversion via DC electric power.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority or inferiority of the invention.

For example, the motors are not limited to the kinds described above, and embodiments of the present invention may be applied to other kinds of motors as long as the motors are used in injection molding machines and regenerate electric power. For example, the motors may include a motor for an ejector. The motor for an ejector operates to move an ejector shaft. With the movement of the ejector shaft, a molded article ejecting process to eject a molded article from molds is performed.

Further, in addition to injection molding machines, presses with a motor and cranes with a motor are examples of loads that cause regeneration of electric power.

## Claims

1. An injection molding machine (30, 50, 42, 62) including a power feed part (36, 43, 56, 63) configured to supply electric power to a motor (38, 39, 58, 59) based on electric power supplied from an external apparatus (20, 27), **characterized in that**:
the power feed part (36, 43, 56, 63) is configured to supply electric power regenerated by the motor (38, 39, 58, 59) to an electric power accumulating part (26) of the external apparatus (20, 27).

2. The injection molding machine as claimed in claim 1, **characterized in that** the power feed part is configured to convert rectangular wave electric power supplied from the external apparatus into alternating current electric power which drives the motor.

3. The injection molding machine as claimed in claim 1 or 2, **characterized in that** the power feed part is configured to convert the electric power regenerated by the motor into rectangular wave electric power, and to supply the rectangular wave electric power to the electric power accumulating part of the external apparatus.

4. An injection molding machine system (1, 2), **characterized by**:
a plurality of injection molding machines (30, 50, 42, 62) as claimed in any of claims 1 to 3; and
a power distributor (20, 27), being the external apparatus, configured to supply electric power to the injection molding machines (30, 50, 42, 62),
wherein the power distributor (20, 27) includes the electric power accumulating part (26) configured to store electric power regenerated by the injection molding machines (30, 50, 42, 62).

5. The injection molding machine system as claimed in claim 4, **characterized in that** the power distributor is configured to convert at least one of the regenerated electric power stored in the electric power accumulating part and externally supplied sine wave electric power into rectangular wave electric power, and
the injection molding machines are configured to drive respective motors (38, 39, 58, 59) that are sources of the regenerated electric power based on the rectangular electric power supplied from the power distributor.

6. The injection molding machine system as claimed in claim 5, **characterized in that** the injection molding machines are configured to convert the regenerated electric power from the respective motors into rectangular wave electric power, and
the power distributor is configured to convert the rectangular wave electric power supplied from the injection molding machines into direct current electric power, and to store the direct current electric power in the electric power accumulating part.

7. The injection molding machine system as claimed in claim 5 or 6, **characterized in that** the power distributor includes
a first conversion part (25) configured to convert the sine wave electric power into direct current electric power storable in the electric power accumulating part; and
a second conversion part (28) configured to convert the direct current electric power obtained by the first conversion part into the rectangular wave electric power supplied to the injection molding machines.

8. The injection molding machine system as claimed in any of claims 5 to 7, **characterized in that** each of the injection molding machines includes
a third conversion part (43, 63) configured to convert the rectangular wave electric power supplied from the power distributor into direct current electric power; and
a fourth conversion part (36, 56) configured to convert the direct current electric power obtained by the third conversion part into alternating current electric power which drives the motors.

## Patentansprüche

1. Spritzgussmaschine (30, 50, 42, 62) mit einem Leistungszuführteil (36, 43, 56, 63), welcher konfiguriert ist zum Zuführen elektrischer Leistung zu einem Motor (38, 39, 58, 59), basierend auf elektrischer Leistung, zugeführt von einer externen Vorrichtung (20, 27) **dadurch gekennzeichnet, dass**
der Leistungszuführteil (36, 42, 56, 63) konfiguriert ist zum Zuführen elektrischer Leistung, regeneriert durch den Motor (38, 39, 58, 59), an einen Elektrische-Leistung-Akkumulierteil (26) der externen Vorrichtung (20, 27).

2. Spritzgussmaschine nach Anspruch 1, **dadurch gekennzeichnet, dass** der Leistungszuführteil konfiguriert ist zum Wandeln von Rechteckwellen-elektrische-Leistung, zugeführt von der externen Vorrichtung, in Wechselstrom-elektrische-Leistung, welche den Motor antreibt.

3. Spritzgussmaschine nach Anspruch 1 oder 2, **dadurch gekennzeichnet, dass** der Leistungszuführteil konfiguriert ist zum Wandeln der elektrischen Leistung, regeneriert durch den Motor, in Rechteckwellen-elektrische-Leistung, und zum Zuführen der Reckteck-Wellen-elektrische-Leistung an den Elektrische-Leistung-Akkumulierteil der externen Vorrichtung.

4. Spritzgussmaschinensystem (1, 2), **gekennzeichnet durch**:
eine Vielzahl von Spritzgussmaschinen (30, 50, 42, 62) nach einem der Ansprüche 1 bis 3; und
einern Leistungsverteiler (20, 27), welcher die externe Vorrichtung ist, konfiguriert zum Zuführen elektrischer Leistung an die Spritzgussmaschinen (30, 50, 42, 62),
wobei der Leistungsverteiler (20, 27) den Elektrische-Leistung-Akkumulierteil (26) umfasst, konfiguriert zum Speichern elektrischer Leistung, regeneriert **durch** die Spritzgussmaschinen (30, 50, 42, 62).

5. Spritzgussmaschinensystem nach Anspruch 4, **dadurch gekennzeichnet, dass** der Leistungsverteiler konfiguriert ist zum Wandeln zumindest einer der regenerierten elektrischen Leistung, gespeichert in dem Elektrische-Leistung-Akkumulierteil und extern zugeführter Sinuswellen-elektrische-Leistung in Reckteck-Wellen-elektrische-Leistung, und
die Spritzgussmaschinen konfiguriert sind zum Treiben jeweiliger Motoren (38, 39, 58, 59), welche Quellen der regenerierten elektrischen Leistung sind, basierend auf der Rechteck-elektrische-Leistung, zugeführt von dem Leistungsverteiler.

6. Spritzgussmaschinensystem nach Anspruch 5, **dadurch gekennzeichnet, dass** die Spritzgussmaschinen konfiguriert sind zum Wandeln der regenerierten elektrischen Leistung von den jeweiligen Motoren in Rechteckwellen-elektrische-Leistung, und
der Leistungsverteiler konfiguriert ist zum Wandeln der Rechteckwellen-elektrische-Leistung, zugeführt von den Spritzgussmaschinen, in Gleichstrom-elektrische-Leistung, und zum Speichern der Gleichstrom-elektrische-Leistung in dem Elektrische-Leistung-Akkumulierteil.

7. Spritzgussmaschinensystem nach Anspruch 5 oder 6, **dadurch gekennzeichnet, dass** der Leistungsverteiler beinhaltet
einen ersten Umwandlungsteil (25), der konfiguriert ist zum Wandeln der Sinuswellen-elektrische-Leistung in Gleichstrom-elektrische-Leistung, speicherbar in dem Elektrische-Leistung-Akkumulierteil; und
einen zweiten Umwandlungsteil (28), der konfiguriert ist zum Wandeln der Gleichstrom-elektrische-Leistung, erlangt durch den ersten Umwandlungsteil, in die Rechteckwellen-elektrische-Leistung, zugeführt an die Spritzgussmaschinen.

8. Spritzgussmaschinensystem nach einem der Ansprüche 5 bis 7, **dadurch gekennzeichnet, dass** jede der Spritzgussmaschinen beinhaltet
einen dritten Umwandlungsteil (43, 63), der konfiguriert ist zum Wandeln der Rechteckwellen-elektrische-Leistung, zugeführt von dem Leistungsverteiler, in Gleichstrom-elektrische-Leistung; und
einen vierten Umwandlungsteil (36, 56), der konfiguriert ist zum Wandeln der Gleichstrom-elektrische-Leistung, erlangt durch den dritten Umwandlungsteil, in Wechselstrom-elektrische-Leistung, welche die Motoren antreibt.

## Revendications

1. Machine de moulage par injection (30, 50, 42, 62) comportant une partie d'alimentation en puissance (36, 43, 56, 63) configurée pour fournir une puissance électrique à un moteur (38, 39, 58, 59) sur la base d'une puissance électrique fournie par un appareil externe (20, 27), **caractérisée en ce que** :
la partie d'alimentation en puissance (36, 43, 56, 63) est configurée pour fournir une puissance électrique régénérée par le moteur (38, 39, 58, 59) à une partie d'accumulation de puissance électrique (26) de l'appareil externe (20, 27).

2. Machine de moulage par injection telle revendiquée dans la revendication 1, **caractérisée en ce que** la partie d'alimentation en puissance est configurée pour convertir une puissance électrique en onde rectangulaire fournie par l'appareil externe en une puissance électrique de courant alternatif qui entraîne le moteur.

3. Machine de moulage par injection telle revendiquée dans la revendication 1 ou 2, **caractérisée en ce que** la partie d'alimentation en puissance est configurée pour convertir la puissance électrique régénérée par le moteur en une puissance électrique en onde rectangulaire et pour fournir la puissance électrique en onde rectangulaire à la partie d'accumulation de puissance électrique de l'appareil externe.

4. Système de machines de moulage par injection (1, 2), **caractérisé par** :
une pluralité de machines de moulage par injection (30, 50, 42, 62) telles revendiquées dans l'une des revendications 1 à 3 ; et
un distributeur de puissance (20, 27), qui est l'appareil externe, configuré pour fournir une puissance électrique aux machines de moulage par injection (30, 50, 42, 62),
dans lequel le distributeur de puissance (20, 27) comporte la partie d'accumulation de puissance électrique (26) configurée pour stocker une puissance électrique régénérée par les machines de moulage par injection (30, 50, 42, 62).

5. Système de machines de moulage par injection tel revendiqué dans la revendication 4, **caractérisé en ce que** le distributeur de puissance est configuré pour convertir au moins l'une de la puissance électrique régénérée stockée dans la partie d'accumulation de puissance électrique et d'une puissance électrique en onde sinusoïdale fournie de l'extérieur en une puissance électrique en onde rectangulaire, et
les machines de moulage par injection sont configurées pour entraîner des moteurs respectifs (38, 39, 58, 59) qui sont des sources de la puissance électrique régénérée sur la base de la puissance électrique en onde rectangulaire fournie par le distributeur de puissance.

6. Système de machines de moulage par injection tel revendiqué dans la revendication 5, **caractérisé en ce que** les machines de moulage par injection sont configurées pour convertir la puissance électrique régénérée provenant des moteurs respectifs en une puissance électrique en onde rectangulaire, et
le distributeur de puissance est configuré pour convertir la puissance électrique en onde rectangulaire fournie par les machines de moulage par injection en une puissance électrique de courant continu et pour stocker la puissance électrique de courant continu dans la partie d'accumulation de puissance électrique.

7. Système de machines de moulage par injection tel revendiqué dans la revendication 5 ou 6, **caractérisé en ce que** le distributeur de puissance comporte
une première partie de conversion (25) configurée pour convertir la puissance électrique en onde sinusoïdale en une puissance électrique de courant continu pouvant être stockée dans la partie d'accumulation de puissance électrique ; et
une deuxième partie de conversion (28) configurée pour convertir la puissance électrique de courant continu obtenue par la première partie de conversion en la puissance électrique en onde rectangulaire fournie aux machines de moulage par injection.

8. Système de machines de moulage par injection tel revendiqué dans l'une des revendications 5 à 7, **caractérisé en ce que** chacune des machines de moulage par injection comporte
une troisième partie de conversion (43, 63) configurée pour convertir la puissance électrique en onde rectangulaire fournie par le distributeur de puissance en une puissance électrique de courant continu ; et
une quatrième partie de conversion (36, 56) configurée pour convertir la puissance électrique de courant continu obtenue par la troisième partie de conversion en une puissance électrique de courant alternatif qui entraîne les moteurs.
